**Europäisches Patentamt**

**European Patent Office**

**Office européen des brevets**

(19)

(11) Veröffentlichungsnummer: **0 033 508 B1**

(12) # EUROPÄISCHE PATENTSCHRIFT

(45) Veröffentlichungstag der Patentschrift:
**11.09.85**

(21) Anmeldenummer: **81100558.6**

(22) Anmeldetag: **26.01.81**

(51) Int. Cl.⁴: **G 01 S 15/08**, G 01 N 29/00, A 61 B 10/00

(54) **Schaltung für wechselweises Aussenden und Empfangen mit nur einem Schallgeber-Wandler.**

(30) Priorität: **30.01.80 DE 3003317**

(43) Veröffentlichungstag der Anmeldung:
**12.08.81 Patentblatt 81/32**

(45) Bekanntmachung des Hinweises auf die Patenterteilung:
**11.09.85 Patentblatt 85/37**

(84) Benannte Vertragsstaaten:
**AT FR IT SE**

(56) Entgegenhaltungen:
**DE - B - 1 005 758**
**DE - B - 2 036 613**
**FR - A - 2 110 374**
**GB - A - 2 006 434**
**US - A - 3 555 889**
**US - A - 3 604 250**
**US - A - 3 620 070**
**US - A - 3 624 596**

(73) Patentinhaber: **Siemens Aktiengesellschaft, Berlin und München Wittelsbacherplatz 2, D-8000 München 2 (DE)**

(72) Erfinder: **Kleinschmidt, Peter, Dipl.-Phys., Klagenfurterstrasse 12, D-8000 München 90 (DE)**

**Beschreibung**

Die Erfindung bezieht sich auf eine für einen piezoelektrischen Schallgeber-Wandler geeignete Schaltung, die im Oberbegriff des Patentanspruchs 1 angegeben ist.

Es ist bekannt, mit einem Ultraschallgeber-Wandler durch elektrische Anregung erzeugte Ultraschallwellen auszusenden, die Echosignale mit einem Schallempfänger-Wandler zu empfangen und die damit gewonnenen elektrischen Echosignale, z. B. zur Entfernungsmessung, auszuwerten. Es ist der Regelfall, daß zur Erhöhung der Schall-Leistung ein Wandler mit ausgeprägter Resonanzüberhöhung verwendet wird und daß der Schallgeber-Wandler aus einem Oszillator mit niedrigem Innenwiderstand spannungsgespeist auf seiner Reihenresonanzfrequenz

$$f_o = \frac{1}{2\,\pi\,(L_m \cdot C_m)^{1/2}}$$

wird. Darin sind $L_m$ und $C_m$ bekanntermaßen die mechanische Induktivität und mechanische Kapazität des Ersatzschaltbildes des Wandlers.

Der Empfang wird mit Hilfe eines zweiten gesonderten Empfänger-Wandlers durchgeführt, dessen Parallelresonanz

$$f_p = \frac{1}{2\,\pi\,\left(L_m \cdot \dfrac{C_m \cdot C_o}{C_m + C_o}\right)^{1/2}}$$

gegeben ist, worin $C_o$ die elektrische Parallelkapazität des Wandlers im Ersatzschaltbild ist. Für die Parallelresonanzfrequenz $f_p$ ist der Empfänger-Wandler hochohmig und liefert eine mit entsprechend großem Rauschabstand auswertbare Signalspannung von empfangenen Echos. Beide Wandler sind so abgestimmt, daß $f_o$ des Sende-Wandlers gleich $f_p$ des Empfänger-Wandlers ist. Der Umstand, daß $f_o$ eines Wandlers kleiner als $f_p$ ist, zwingt zu dieser Verwendung zweier verschieden, d. h. auf verschiedene Reihenresonanzfrequenzen $f_o$ (des Sende-Wandlers) und $f'_o$ (des Empfänger-Wandlers), abgestimmter Wandler.

Aus der US-A-3 624 596 und US-A-3 604 250, die die Merkmale des Oberbegriffes des Patentanspruchs 1 enthalten, ist es bekannt, unter Inkaufnahme geringer Rauschabstände und/oder geringerer Empfangsleistung ein und denselben Schallwandler zum Senden und zum Empfangen zu verwenden, insbesondere, wenn dieser außerdem auch noch eine sehr schlechte Schwinggüte, d. h., sehr große Bandbreite (mit entsprechend geringer Resonanzüberhöhung), hat. Eine andere Möglichkeit ist, mit nur einem einzigen Wandler zu arbeiten und diesen unter Verzicht auf effektive elektrische Anregung und Schallabstrahlung als Sender in der Parallelresonanz $f_p$ anzuregen.

Es ist eine Aufgabe der vorliegenden Erfindung, eine Schaltung für einen optimal in Reihenresonanz $f_o$ anzuregenden Sender-Schallgeber-Wandler anzugeben, mit der auch wechselweiser Empfang mit diesem einen einzigen Wandler mit ebenfalls optimal hoher Empfangseffektivität und hohem Störabstand durchzuführen ist.

Diese Aufgabe wird für eine Schaltung mit den Merkmalen des Oberbegriffes des Patentanspruchs 1 erfindungsgemäß mit den Merkmalen des Kennzeichens des Patentanspruchs 1 gelöst. Weitere Ausgestaltungen und Weiterbildungen der Erfindung gehen aus den abhängigen Ansprüchen hervor.

Nachfolgend werden anhand der im Zusammenhang mit den Figuren gegebenen Beschreibung sowohl Ausführungsbeispiele der Erfindung als auch das der Erfindung zugrunde liegende Prinzip näher erläutert.

Fig. 1 zeigt eine erste Variante einer Ausführungsform des Erfindungsprinzips;

Fig. 2 zeigt eine entsprechende zweite Variante;

Fig. 3 und 4 zeigen eine Weiterbildung mit Übertragerausgang für die Varianten nach den Fig. 1 und 2;

Fig. 5 und 6 zeigen zwei Varianten für eine Entkopplung des Wandlers und des Oszillators voneinander.

In den Figuren ist mit 1 der Schallgeber-Wandler bezeichnet, der auch als Empfänger-Wandler, und zwar bei der Erfindung mit hoher Effektivität, zu verwenden ist. Mit 2 ist ein dem Prinzip nach als Schalter wirksames Element bezeichnet, mit dem die für den Sendebetrieb vorgesehene Anregungswechselspannung des Oszillators 3 dem Schallgeber-Wandler 1 zu vorgebbarten Sendezeitintervallen zugeführt wird. Mit dem Schließen dieses Schalters 2 kann also der Sendetakt bestimmt werden. Der Schalter 2 kann eine Taktmodulation des Sendeoszillattors 3, d. h., ein Ein- und Ausschalten dieses Oszillators, sein. Auf jedoch besondere, im Rahmen der Erfindung vorteilhaft ausgestaltete Ausführungen eines solchen prinzipiellen Schalters 2 wird noch eingegangen.

Parallel zu dem Schallgeber-Wandler 1 liegt ein in seiner eigentlichen Funktion nachfolgend noch näher zu beschreibender Reihenresonanzkreis 4 aus einer Kapazität C und einer Induktivität L. Dieser Reihenresonanzkreis 4 ist mit seiner (Reihen-)Resonanz

$$f = \frac{1}{2\,\pi\,(L \cdot C)^{1/2}}$$

auf die Reihenresonanzfrequenz

$$f_o = \frac{1}{2\,\pi\,(C_m \cdot L_m)^{1/2}}$$

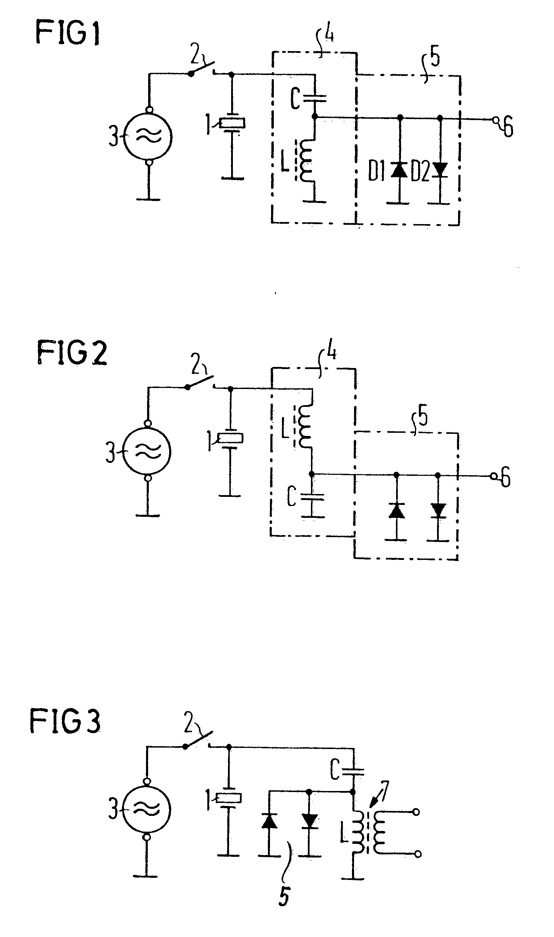

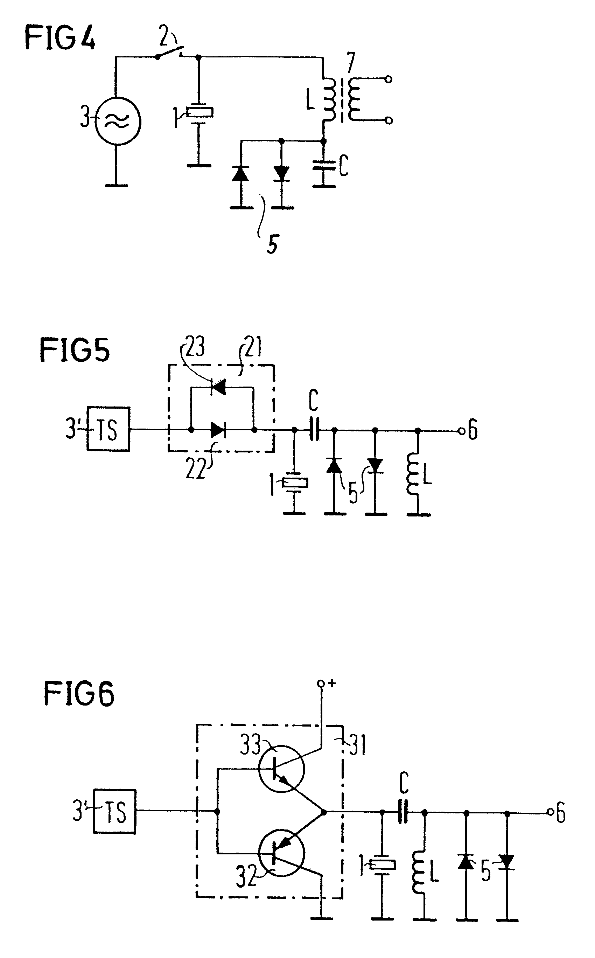

des Wandlers 1 abgestimmt. Damit dieser Reihenresonanzkreis 4 für den Sendebetrieb, d. h. bei geschlossenem Schalter 2, für den Wandler 1 kein unnötiger parallel liegender Kurzschluß ist, sind gemäß einem weiteren Merkmal der Erfindung entweder der Induktivität L (Fig. 1 und 3) oder der Kapazität C (Fig. 2 und 4) eine Parallelschaltung 5 aus antiparallel gepolten Dioden $D_1$ und $D_2$ (wie in den Figuren dargestellt) parallel geschaltet. Für die beim Sendebetrieb am Wandler 1 und damit an der Induktivität L und an dem Kondensator C (bei Nichtvorhandensein der Dioden-Parallelschaltung) auftretenden, relativ hohen Spannungen stellen die Dioden $D_1$ und $D_2$ Kurzschlüsse für die jeweils eine Halbwelle der Oszillator-Wechselspannung dar, die an diese Dioden gelangen. Diese Kurzschlußwirkung der Dioden $D_1$ und $D_2$ führt dazu, daß der Reihenresonanzkreis 4 im Sendebetrieb, d. h. bei geschlossenem Schalter 2, außerordentlich stark bedämpft ist, so daß dieser Reihenkreis bei den hohen Anregungsspannungen des Oszillators 3 am Wandler 1 als relativ zum Wandlerwiderstand hochohmiger Widerstand erscheint und folglich keinen nennenswerten Nebenschluß für die elektrische Anregung des Wandleres 1 darstellt.

Völlig anders sind die Verhältnisse bei Ultraschall-Empfang mit dem Wandler 1. Die Echosignale haben zwangsläufig die Frequenz $f_0$. Im nunmehr als Empfänger wirksamen Wandler 1 mit für $f_0$ nach wie vor niedrigem Innenwiderstand wird eine elektrische EMK (der Frequenz $f_0$) als Empfangssignal erzeugt. Diese erzeugte EMK tritt wegen des in den Pausen des Sendebetriebes geöffneten Schalters 2 allein am Reihenresonanzkreis 4, gebildet aus der Kapazität C und der Induktivität L, auf. Bei relativ hoher Güte des Reihenresonanzkreises 4 ist dessen Resonanzwiderstand in Reihenresonanz klein im Vergleich zum Reihenresonanz-Innenwiderstand des Wandlers 1. Ein besonderer Vorteil der Verwendung des Reihenresonanzkreises 4 liegt in der Resonanzüberhöhung der Empfangs-EMK des Wandlers 1 an der Kapazität C und der Induktivität L. Die an der Induktivität L (Fig. 1 und 3) bzw. an der Kapazität C (Fig. 2 und 4) auftretende Empfangs-Signalspannung ist um den Faktor

$$\beta = \frac{\omega L}{R} = \frac{1}{\omega C \cdot R}$$

größer als die EMK des Wandlers. R ist der ohmsche Verlustwiderstand des Wandlers. Im Regelfall bleibt diese Spannung stets unter einem Wert von ca. 0,6 V, nämlich unter der Schwellenspannung der Dioden $D_1$, $D_2$. Einer solchen Empfangsspannung gegenüber sind diese Dioden $D_1$ und $D_2$ hochohmig und damit als Kurzschlüsse vernachlässigbar. Eine ab Spannungen über 0,6 V auftretende Parallelschlußwirkung der Dioden $D_1$ und $D_2$ ist schon deshalb uninteressant, weil in diesem Fall dann die Empfangs-Signalspannung schon so groß ist, daß eine Begrenzung der Empfangssignale keinen Nachteil darstellt. Im Gegenteil ist es sogar von Vorteil, zu große Signale von den nachfolgenden Verstärkern fernzuhalten.

Mit 6 ist der Signalausgang für das empfangene Echosignal des Wandlers 1 bezeichnet. Bei den Ausführungen der Fig. 3 und 4 ist die Induktivität L der Fig. 1 und 2 als Übertrager 7 ausgebildet. Mit diesem Übertrager 7 kann die Ausgangsimpedanz der erfindungsgemäßen Schaltung in einfacher Weise auf den Wert bemessen werden, der am Ausgangsanschluß 6 gewünscht ist.

Durch eine wie in den Ansprüchen 3 und 4 angegebene Bemessung läßt sich bei der erfindungsgemäßen Schaltung die Ausgangsspannung dadurch steigern, indem man den Wert C der Kapazität des Reihenresonanzkreises unter Einhaltung der Resonanzbedingung

$$f_0 = \frac{1}{2\pi(L \cdot C)^{1/2}}$$

klein, z. B. 1- bis 30mal kleiner als die elektrische Parallelkapazität $C_0$ des Wandlers 1 wählt. Für $C = C_0$ gibt die erfindungsgemäße Schaltung bereits genau soviel Spannung ab wie ein herkömmlicher, auf Parallelresonanz $f_p$ betriebener zweiter Empfangswandler. Wird aber die voranstehend angegebene Bemessung sogar $C < C_0$ gewählt, tritt an C eine etwa dem Verhältnis $C_0/C$ entsprechende Spannungserhöhung an der kleineren Kapazität C auf. Diese um einen Faktor $\alpha$ mögliche Steigerung der Ausgangsspannung ist durch die zu erzielende relative Bandbreite des Wandlers beschränkt. Für große C ($C \approx C_0$) ist die Bandbreite allein durch die Bandbreite des Wandlers gegeben:

$$\Delta f/f = 1/Q_m.$$

Wird $C_0/C$ jedoch größer gewählt als der reziproke quadratische Kopplungsfaktor, tritt ein zusätzlicher merklicher Bandbreitenverlust ein. Eine sinnvolle Grenze für $\alpha$ stellt der Wert

$$\alpha = C_0/C = 1/k^2$$

dar. Für die Bandbreite B gilt

$$B = B_m \frac{1}{1 + k^2 C_0/C} = B_m \frac{1}{1 + \alpha k^2}.$$

Dabei ist k der Kopplungsfaktor des Wandlers 1 und $B_m$ seine natürliche Bandbreite. Aus der Formel ist ersichtlich, daß mit größerem $\alpha$ die Empfangs-Bandbreite abnimmt. Es ergibt sich ein

$$\alpha = \frac{1}{k^2},$$

wobei eine Verringerung der Bandbreite (gegenüber der des Wandlers 1 in der Reihenresonanz) um den Faktor 2 auftritt. Ist die Verringerung der Bandbreite anwendungsbedingt ohne Bedeutung, so ist eine weitere Grenze für den Spannungsgewinn durch die Güte des elektrischen Reihenkreises gegeben:

$$\alpha_{max} = \frac{Q_{el}}{k^2 Q_m}$$

mit $Q_{el}$ = Schwinggüte des Reihenresonanzkreises,

$Q_m$ = Schwinggüte des Wandlers.

Bereits eingangs wurde im Zusammenhang mit dem Schalter 2 auf im Rahmen der vorliegenden Erfindung, d. h. im Zusammenhang mit der erfindungsgemäßen Schaltung, besonders vorteilhafte Möglichkeiten der Ausgestaltung hingewiesen. Das dem Prinzip nach als einfacher Schalter bezeichnete Schaltungsteil 2 wird bei bekannten Anordnungen, bei denen der Wandler 1 nur als Sender dient, technisch in der Weise realisiert, daß man die Erzeugung und/oder Abgabe der Oszillator-Wechselspannung des Oszillators 3 in einer der vielen bekannten Variationsmöglichkeiten steuert bzw. tastet. Eine Trennung zwischen Wandler 1 und Oszillator 3, d. h., eine Entkopplung von Wandler 1 und Oszillator 3 voneinander, ist während der Sendepausen ersichtlich nicht erforderlich.

Bei der vorliegenden Erfindung jedoch, bei der der Wandler 1 auch als Empfangswandler dient, würde eine solche Kopplung zwischen dem Wandler 1 und Oszillator 3 während der Empfangsphase störend sein. Dies insbesondere wegen des niedrigen Innenwiderstandes des Oszillators 3 und/oder wegen des hohen Rausch-Ausgangssignals des Oszillators 3. Bei der Erfindung ist es also von erheblichem Vorteil, eine wie mit dem Schalter 2 symbolisch angedeutete Trennung bzw. Entkopplung zwischen Wandler 1 und Oszillator 3 während der Empfangsphase vorzunehmen.

Für eine Ausführungsform der Erfindung nach Fig. 1 ist in den Fig. 5 und 6 je eine Variante der diesbezüglichen Weiterbildung der Erfindung dargestellt. Diese Varianten können auch bei den Schaltungen nach den Fig. 2 bis 4 der Erfindung mit gleichem Vorteil realisiert werden.

In Fig. 5 ist die durch den symbolischen Schalter 2 in Fig. 1 erreichte Trennung bzw. Entkopplung von Wandler 1 und Oszillator 3' mit Hilfe einer Parallelschaltung 21 aus antiparallelen Dioden 22 und 23 (wie in der Figur dargestellt) realisiert. Wie der Schalter 2 liegt diese Parallelschaltung 21 in Reihe zwischen dem Wandler 1 und dem Oszillator 3'. Der Oszillator 3' ist so ausgebildet, daß er Sendeimpulse der Wechselspannung mit der Frequenz $f_o$ liefert. Die Parallelschaltung 21 erfüllt hier genau genommen nur die Funktion der Entkopplung, während das Schalten der Sendespannung in dem Oszillator 3' erfolgt. Die Dioden 22 und 23 haben eine Schwellenspannung von etwa 0,6 V (wie die Dioden $D_1$ und $D_2$). Für die Amplitude der im Wandler 1 erzeugten Empfangs-EMK sind diese Dioden 22 und 23 stets hochohmig.

Fig. 6 zeigt eine Parallelschaltung 31 aus zwei Komplementär-Transistoren 32 und 33, die in einer als Emitterfolger bezeichneten Schaltung geschaltet sind. Die Basisanschlüsse und die Emitteranschlüsse sind jeweils miteinander verbunden. Wie die Fig. 6 zeigt, liegt der Kollektor des einen Transistors (beispielsweise 32) an Masse und der Kollektor des Transistors 33 an Potential. Diese Parallelschaltung aus den Transistoren 32 und 33 liegt, wie auch Fig. 6 zeigt, wiederum in Reihe zwischen dem Wandler 1 und dem Oszillator 3'. Die Transistoren 32 und 33 in der Schaltung der Fig. 6 sorgen zusätzlich für eine niedrige Anregungsimpedanz, was für das Prinzip der erfindungsgemäßen Schaltung von weiterer Bedeutung ist. Diese Variante nach Fig. 6 ist dann vorzuziehen, wenn die zur Verfügung stehende Oszillatorschaltung 3' einen an sich nicht ausreichend niedrigen Innenwiderstand besitzt. Auch bei der Ausführung nach Fig. 6 ist ein Oszillator 3' mit der Funktion der Aussendung getakteter Sendewechselspannungen $f_o$ vorgesehen.

**Patentansprüche**

1. Schaltung zum wechselweisen Aussenden und Empfangen mit ein und demselben Schallwandler (1),

wobei diese Schaltung eine Kapazität (C) und eine Induktivität (L), die einen Resonanzkreis (4) bilden, und eine Antiparallelschaltung (5) zweier Dioden ($D_1$, $D_2$) enthält, und

wobei der Ausgang (6) der Schaltung, an den der Empfänger angeschlossen wird, der Antiparallelschaltung parallel liegt und Maßnahmen zum während der Sendephase erfolgenden Anschluß (2) des Sendewechselspannungs-Generators (3) an den Wandleranschlüssen vorgesehen sind,

gekennzeichnet dadurch,

daß der Resonanzkreis (4) ein Reihenresonanzkreis ist, der auf die Reihenresonanzfrequenz $f_o$ des Wandlers (1) abgestimmt ist,

wobei dieser Reihenresonanzkreis parallel zum Wandler (1) liegt, und

daß die Dioden-Antiparallelschaltung (5) entweder parallel der Kapazität (C) oder parallel der Induktivität (L) dieses Reihenresonanzkreises liegt.

2. Schaltung nach Anspruch 1, gekennzeichnet dadurch, daß die Induktivität (L) ein Übertrager (7) ist.

3. Schaltung nach Anspruch 1 oder 2, gekennzeichnet dadurch, daß die Kapazität (C) kleiner als der Wert $C_o$ der elektrischen Parallelkapazität des Schallgeber-Wandlers (1) gewählt ist.

4. Schaltung nach den Ansprüchen 1, 2 oder 3, gekennzeichnet dadurch, daß die Kapazität (C) des parallelgeschalteten elektrischen Resonanzkreises (L; C) etwa den Wert $C_o \cdot k^2$ aufweist, wobei $k^2$ den elektromechanischen Kopplungsfaktor des Wandlers (1) und $C_o$ seine elektrische Parallelkapazität darstellen.

5. Schaltung nach den Ansprüchen 1, 2 oder 3, gekennzeichnet dadurch, daß

$$\alpha = \frac{C_o}{C}$$

so gewählt wird, daß bei vorgegebenem Güte-wert $Q_{el}$ des parallelgeschalteten elektrischen Resonanzkreises (L; C) und vorgegebenem Gü-tewert $Q_m$ und Kopplungswert $k^2$ des Wandlers sich wenigstens angenähert

$$\frac{C_o}{C} = \frac{Q_{el}}{k^2 \cdot Q_m}$$

ergibt, wobei $C_o$ die elektrische Parallelkapazität des Wandlers (1) ist.

6. Schaltung nach einem der Ansprüche 1 bis 5, gekennzeichnet dadurch, daß zur Entkopplung des Wandlers (1) und des Oszillators (3') in der Empfangsphase zwischen Wandler (1) und Oszillator (3') eine Parallelschaltung (21) aus zwei antiparallelen Dioden (22, 23) eingefügt ist.

7. Schaltung nach einem der Ansprüche 1 bis 5, gekennzeichnet dadurch, daß zur Entkopplung des Wandlers (1) und des Oszillators (3') in der Empfangsphase zwischen Wandler (1) und Oszillator (3') eine Parallelschaltung (31) aus zwei in Emitterfolgerschaltung geschalteten Komplementärtransistoren (32, 33) eingefügt ist.

**Claims**

1. A circuit for alternately transmitting and receiving via a single sound transducer (1), where the circuit comprises a capacitance (C) and an inductance (L), forming a resonant circuit (4), and an anti-parallel circuit (5) of two diodes ($D_1$, $D_2$), and where the output (6) of the circuit, to which output the receiver is connected, is parallel to the anti-parallel circuit and means (2) are provided for connection of the transmitting a.c. voltage generator (3) to the transducer terminals during the transmitting phase, characterised in that the resonant circuit (4) is a series resonant circuit tuned to the series resonance frequency $f_o$ of the transducer (1), where the series resonant circuit is parallel to the transducer (1), and that the diode anti-parallel circuit (5) is either parallel to the capacitance (C) or parallel to the inductance (L) of the series resonant circuit.

2. A circuit as claimed in Claim 1, characterised in that the inductance (L) is a transformer (7).

3. A circuit as claimed in Claim 1 or 2, characterised in that the capacitance (C) is smaller than the value $C_o$ of the electrically parallel capacitance of the sound transmitter transducer (1).

4. A circuit as claimed in Claims 1, 2 or 3, characterised in that the capacitance (C) of the electric resonant circuit (L; C), connected in parallel, has the approximate value $C_o \cdot k^2$, where $k^2$ re-presents the electro-mechanical coupling factor of the transducer (1) and $C_o$ its electrically paral-lel capacitance.

5. A circuit as claimed in Claims 1, 2 or 3, char-acterised in that

$$\alpha = \frac{C_o}{C}$$

is such that for a predetermined quality factor $Q_{el}$ of the parallel electric resonant circuit (L; C) and a predetermined quality factor $Q_m$ and coup-ling factor $k^2$ of the transducer, we have at least approximately

$$\frac{C_o}{C} = \frac{Q_{el}}{k^2 \cdot Q_m}$$

where $C_o$ is the electrically parallel capacitance of the transducer (1).

6. A circuit as claimed in one of Claims 1 to 5, characterised in that in order to decouple the transducer (1) and the oscillator (3') in the receiving phase a parallel circuit (21) of two anti-parallel diodes (22, 23), is inserted between the transducer (1) and the oscillator (3').

7. A circuit as claimed in one of Claims 1 to 5, characterised in that in order to decouple the transducer (1) and the oscillator (3') in the receiving phase a parallel circuit (31) consisting of two complementary transistors (32, 33) connected as an emitter follower circuit inserted between the transducer (1) and the oscillator (3').

**Revendications**

1. Circuit servant à réaliser l'émission et la réception alternées avec un même transducteur acoustique (1), et qui contient une capacité (C) et une inductance (L), qui forment un circuit résonnant (5), et un circuit antiparallèle (5) formé de deux diodes ($D_1$, $D_2$), et dans lequel la sortie (6) du circuit, à laquelle est raccordé le récepteur, est montée en parallèle avec le circuit antiparallèle, et des dispositions sont prévues pour le raccordement (2), effectué pendant la phase d'émission, du générateur (3) de tension alternative d'émission aux bornes du transducteur, caractérisé en ce que le circuit résonnant (4) est un circuit résonnant série qui est accordé sur la fré-quence de résonance série $f_o$ du transducteur (1) et qui est paralèlle au transducteur (1), et que le circuit antiparallèle à diodes (5) est situé soit en parallèle avec la capacité (C), soit en parallèle avec l'inductance (L) de ce circuit résonnant série.

2. Circuit suivant la revendication 1, caractérisé par le fait que l'inductance (L) est un transformateur (7).

3. Circuit suivant la revendication 1 ou 2, caractérisé par le fait que la capacité (C) est choisie inférieure à la valeur $C_o$ de la capacité parallèle électrique du transducteur-générateur acoustique (1).

4. Circuit suivant la revendication 1, 2 ou 3, caractérisé par le fait que la capacité (C) du circuit résonnant électrique (L; C) branché en parallèle, possède approximativement la valeur

$C_o \cdot k^2$, $k^2$ représentant le facteur de couplage électromécanique du transducteur (1) et $C_o$ représentant la capacité parallèle électrique.

5. Circuit suivant les revendications 1, 2 ou 3, caractérisé par le fait que l'on choisit:

$$\alpha = \frac{C_o}{C}$$

de telle sorte que, pour un facteur de qualité $Q_{el}$ prédéterminé du circuit résonnant électrique (L; C) branché en parallèle, et pour un facteur de qualité $Q_m$ et un coefficient de couplage $k^2$ prédéterminés du transducteur, on obtient au moins de façon approchée

$$\frac{C_o}{C} = \frac{Q_{el}}{k^2 \cdot Q_m}$$

$C_o$ représentant la capacité électrique parallèle du transducteur (1).

6. Circuit suivant l'une des revendications 1 à 5, caractérisé par le fait que pour réaliser le découplage du transducteur (1) et de l'oscillateur (3') dans la phase de réception, un circuit parallèle (21) formé de deux diodes (22, 23) antiparallèles est inséré entre le transducteur (1) et l'oscillateur (3').

7. Circuit suivant l'une des revendications 1 à 5, caractérisé par le fait que pour réaliser le découplage du transducteur (1) et de l'oscillateur (3') pendant la phase de réception, un circuit en parallèle (31) formé de deux transistors complémentaires (32, 33) branchés en émetteurs-suiveurs est inséré entre le transducteur (1) et l'oscillateur (3').

**FIG 1**

**FIG 2**

**FIG 3**

**FIG 4**

**FIG 5**

**FIG 6**